# EUROPEAN PATENT APPLICATION

(11) **EP 4 261 356 A1**
(43) Date of publication of application: **18.10.2023**
(21) Application number: 23167823.6
(22) Date of filing: 13.04.2023
(51) Int. Cl.: E03F 1/00, F16B 5/07

(54) **RAINWATER BOX WITH SIDE CONNECTORS**

(30) Priority: 14.04.2022 NL 2031592
(71) Applicant: Pipelife Nederland B.V., 1601 MA Enkhuizen (NL)
(72) Inventor: Hoekstra, Hielke Dolf, 8925 HM Leeuwarden (NL); Schouten, Michael Adrianus Jacobus, 1689 WT Zwaag (NL); Bohle, Ulrich, 50226 Frechen (DE); Schäfer, Matthias, 96465 Neustadt bei Coburg (DE); Lechner, Michael, 96269 Großheirath (DE)
(74) Representative: Nederlandsch Octrooibureau

(57) **Abstract**

A drainage box (10) comprises an upper frame (12) in a rectangular shape with first and second opposing sides (20, 22), first and second opposing ends (24, 26) and an open middle portion between the sides and ends; at least one connection element (40) on each of the first and second opposing sides (20, 22) and first and second opposing ends (24, 26). Each connection element (40) comprises a receiving portion (42) and a protruding portion (44), the receiving portion (42) shaped complementary to the protruding portion (44) such that a frame having a similar connection element can secure to the upper frame (12) by engaging the respective connection elements such that the protruding portion of the connection element of the upper frame fits into the receiving portion of the connection element of the second frame, and the receiving portion of the connection element of the upper frame receives the protruding portion of the connection element of the second frame.

## Description

### FIELD OF THE INVENTION

The invention relates to a rainwater box, and particularly side connectors for such a box.

### BACKGROUND OF THE INVENTION

Liquid receiving, storage and draining structures, also known as a storm box, drainage box or rainwater box, can be used for various purposes. Often, these structures are placed underground for temporarily storing and draining large amounts of water. The structure provides the possibility to collect and store large amounts of water, such as which may occur as a result of heavy rain fall and the like.

The storage capacity thus obtained provides a temporary relief for the surface and underground, in such a way that flooding and erosion can be prevented or at least mitigated. The water collected in the structure may subsequently be released in a controlled manner, whereby a buffer function is obtained. The release may be carried out in several ways, such as discharge through a sewer, by means of infiltration into the underground etc.

Usually, such structures are built from a plurality of elements that are joined together. The elements typically form a containment structure for receiving the water, having openings towards the surrounding underground, and being surrounded by a textile or foil, such that only liquids may enter the containment structure, and any dirt or other larger elements are kept out.

The elements used for building up the structure can be modular units which allow for flexibility in building to different sizes. They can include columns and panels which fit together to hold the columns together. The panels are typically joined together with clips to secure the panels together and in the proper position. However, the building up of the structure with the panels, columns and clips can be time consuming having to orient everything properly and then ensure they are secured with separate pieces. Other prior art boxes include connectors integrated into the sides of a top panel or deck of the box. The columns fit into receiving cavities to connect the boxes vertically, and male and female connectors extend around the sides of the top panel to connect boxes side by side to form an assembly.

### SUMMARY OF THE INVENTION

According to a first aspect, a drainage box comprises an upper frame in a rectangular shape with first and second opposing sides, first and second opposing ends and an open middle portion between the sides and ends; and at least one connection element on each of the first and second opposing sides and first and second opposing ends. Each connection element comprises a receiving portion and a protruding portion, the receiving portion shaped complementary to the protruding portion such that a frame having a similar connection element can secure to the upper frame by engaging the respective connection elements such that the protruding portion of the connection element of the upper frame fits into the receiving portion of the connection element of the second frame, and the receiving portion of the connection element of the upper frame receives the protruding portion of the connection element of the second frame. The receiving portion extends through the upper frame and the protruding portion has a height less than a height of the receiving portion and frame. Such a configuration allows for an easy and simple way to connect adjacent drainage boxes in a side by side fashion without needing additional parts (e.g., clips).

According to an embodiment, the protruding portion is offset from a top of the upper frame. This allows for less movement in a vertical direction when connecting while still providing a strong engagement of connection element.

According to an embodiment, the protruding portion is a curved, arcuate or semicircular extension. Optionally, the receiving portion is a curved, arcuate or semicircular groove extending into the upper frame. Such a curved, arcuate or semicircular configuration provides for a strong engagement, easy connection and a shallow extension into the upper frame, thereby preserving the strength of the upper frame.

According to an embodiment, the receiving portion extends a maximum of 40%, preferably a maximum of 30% of the width of the frame side or end. This ensures that the frame side or end maintains the required strength, particularly for larger modular systems where many boxes are connected and/or stacked together.

According to an embodiment, each connection element is positioned and shaped to be connectable to a further connection element of a second frame to secure the upper frame with respect to the second frame in both a direction perpendicular to a plane of the side or end and a direction in the plane of the side or end. Such a configuration ensure a strong and stable connection in a plurality of directions through the connection elements.

According to an embodiment, each side and end comprises at least two connection elements. Having at least two connection elements per side can ensure a robust and durable connection.

According to an embodiment, the box comprises a polymer material. Polymer materials can provide for a strong and stable box for an underground storage structure. A polymer material is also relatively easy to use in complex shapes, such as the box with the connection elements.

According to an embodiment, the connection elements are integrally formed with the first and second sides and first and second ends. This can be, for example, through injection molding or other means. Integrally forming the side/end with connection elements can ensure that connection elements stay securely attached to the side/end and do not break off when subjected to various forces.

According to an embodiment, the at least one connection element is self-locking when secured to another connection element. This can be through the shape of connection element parts (e.g., tapering) or other means.

According to an embodiment, the box further comprises a lower frame in a rectangular shape with first and second opposing sides, first and second opposing ends and an open middle portion between the sides and ends; at least one column connecting each of the first sides of the upper and lower frames; the second sides of the upper and lower frames; the first ends of the upper and lower frames; and the second ends of the upper and lower frames. Optionally, the first and second sides and ends of the respective upper and lower frames are rotatably connected to each other. This configuration can allow the box to fold down to a substantially planar state for storage or transport, and then to a cubic or rectangular state for use. Because connection elements are located on an outside of the upper frame, they can allow for connection in a folded state as well, thereby securing the folded boxes for storage or transport with respect to each other.

According to an embodiment, a plurality of rotatable boxes are secured together through the engagement of connection elements, wherein a second box with an identical connection element is secured to a first box by connecting through engaging the respective connection elements such that the protruding portion of the connection element of the first box is fitted into the receiving portion of the connection element of the second box and the protruding portion of the connection element of the second box is received in the receiving portion of the connection element of the first box. Optionally, adjacent boxes are secured together at their respective upper frames by at least two identical connection elements on each upper frame engaging each other to connect and secure the adjacent boxes together. This is a strong yet simple way of connecting such boxes side by side.

According to a further aspect, a drainage structure with a top side, a bottom side and sides extending between the top side and the bottom side is formed from a plurality of boxes. Adjacent boxes in a similar plane are secured together by means of their respective connection elements. Such a structure can be easily and quickly assembled using the connection elements and forms a stable structure.

According to a further aspect, a method of manufacturing a frame for a drainage box is provided. The method includes connecting first and second sides to first and second ends to form a rectangular shape with an open central portion, wherein each of the first and second sides and ends comprise at least one connection element. Each connection element comprises a receiving portion and a protruding portion, the receiving portion shaped complementary to the protruding portion such that a frame having a similar connection element can secure to the upper frame by engaging the respective connection elements such that the protruding portion of the connection element of the upper frame fits into the receiving portion of the connection element of the second frame, and the receiving portion of the connection element of the upper frame receives the protruding portion of the connection element of the second frame, wherein the receiving portion extends through the upper frame and the protruding portion has a height less than a height of the receiving portion and frame. Optionally, each side and end can be formed through injection moulding.

### Brief description of the several views of the figures

The invention will be described further with respect to embodiments shown in the drawings.
Figure 1A shows a perspective view of a drainage box.
Figure 1B shows a side view of the box of Figure 1A.
Figure 1C shows a top view of the box of Figure 1A.
Figure 1D shows a view of the box of Figure 1A in a folded state.
Figure 2A shows a perspective close-up view of two connection elements.
Figure 2B shows a top view of the connection elements of FIG. 2A.
Figure 3 shows a top view of two boxes connected together.

### Detailed Description

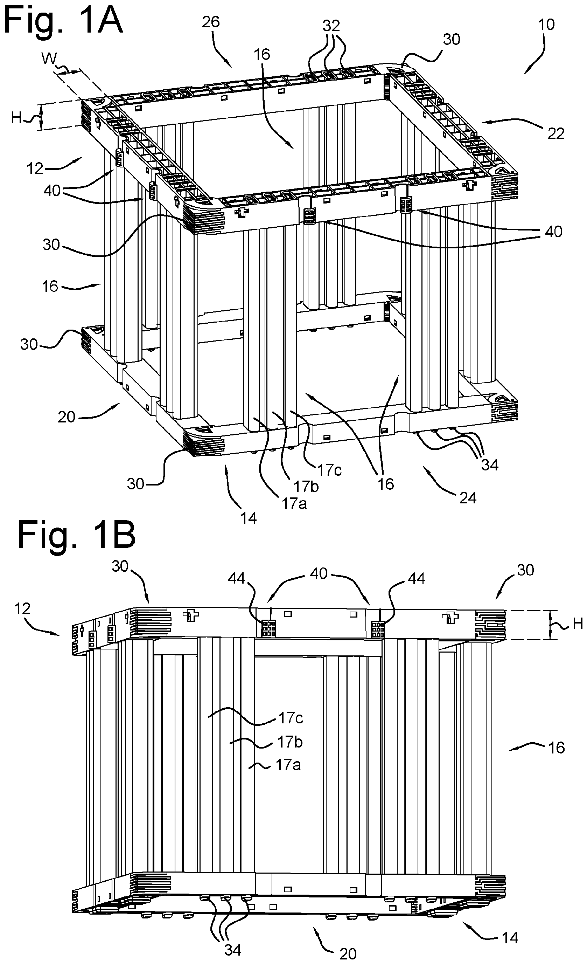

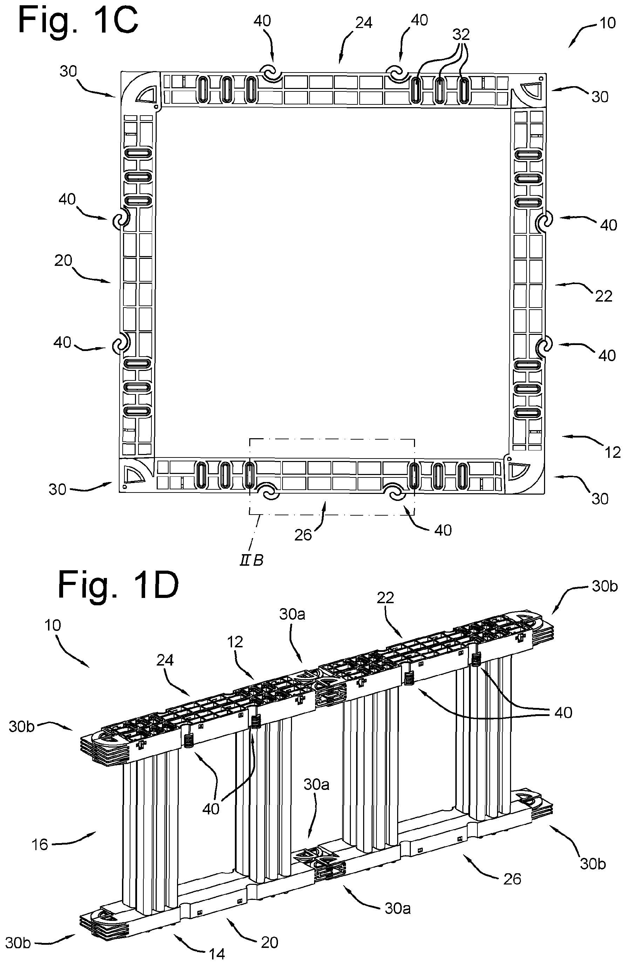

Figure 1A shows a perspective view of a drainage box 10, Figure 1B shows a side view of box 10, Figure 1C shows a top view of box 10, and Figure 1D shows box 10 in a folded state.

Box 10 includes upper frame 12, lower frame 14 and pillars 16, which form first side 20, second side 22, first end 24, second end 26. First side 20 connects to first end 24 and second end 26 at hinges 30 on each of upper frame 12 and lower frame 14. Second side 22 also connects to each of first end 24 and second end 26 at hinges 30 on upper frame 12 and lower frame 14.

Pillars 16 extend between upper frame 12 and lower frame 14 on each of first and second sides 20, 22 and first and second ends 24, 26. Pillars 16 are shown as three oval shaped columns 17a, 17b, 17c connected to each other, though could have a different configuration, for example a different shape and/or number of columns. Connections between the columns 17a, 17b, 17c can be planar connections to give additional strength and resistance to buckling. Upper frame 12, on its upper surface, includes a cavity 32 aligned with the top of each column. A foot 34 extends from the lower surface of lower frame 14 aligned with the bottom of each column 17a, 17b, 17c. The foot 34 is configured to fit into the cavity 32 such that boxes 10 can stack on top of one another.

Hinges 30 connecting sides 20, 22 and ends 24, 26 are rotatable hinges to rotate the box from a flat or collapsed configuration (see Figure 1D) for storage or transport to the use position shown in Figures 1A-1C. In some embodiments, hinges 30a can have a different configuration than hinges 30b to allow for the correct amounts of rotation (e.g., rotation from 180 degrees to 90 degrees for hinges 30a and rotation from stacked on each other or zero degrees to 90 degrees for hinges 30b). In some embodiments hinges could lock once opened such that the box could not be collapsed again. Flat plate hinges are shown which can provide strength to the box, though other types of hinges could be used. In other embodiments, the hinges may not be rotatable and might simply be connections between the sides and ends.

The sides/ends and/or entire box 10 can be formed of a plastic material, or another material which has sufficient strength. For example, each side/end of box 10 could be formed as one integral piece through injection moulding or another suitable production method. Then each side 20, 22 and end 24, 26 could be connected at hinges 30.

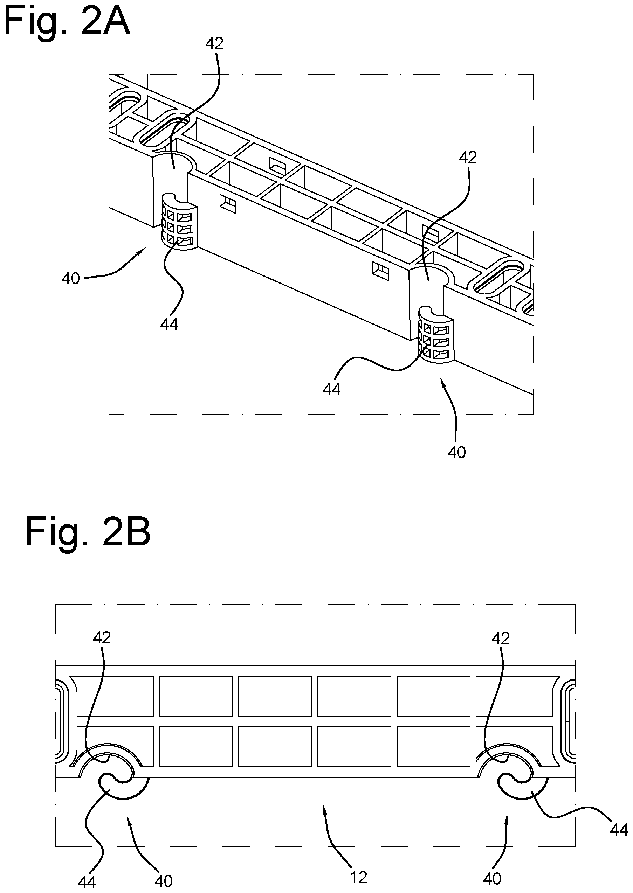

Upper frame 12 also includes connection elements 40 on the outer side of each of first and second sides 20, 22 and first and second ends 24, 26. These are shown enlarged in Figures 2A-2B. In the embodiment shown in Figs. 1A-1D, each of first and second sides 20, 22 and first and second ends 24, 26 include two connection elements 40, though this could vary and include more or less in other embodiments. Typically, each side or end would include at least one connection element 40.

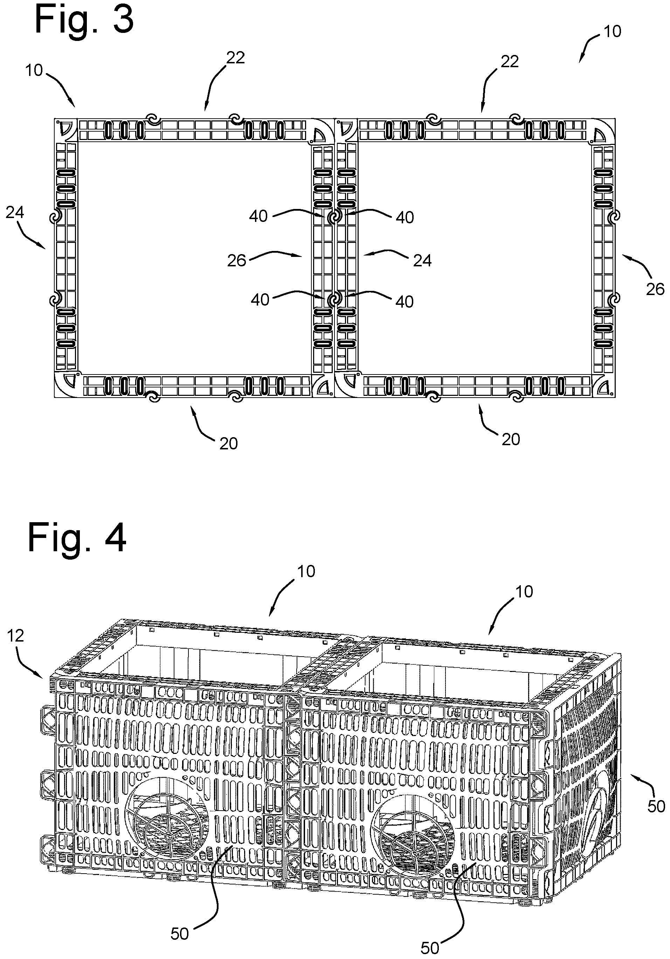

Each connection element 40 includes a receiving portion 42 and a protruding portion 44. The receiving portion is curved, arcuate or semicircular, extending into the width W of the upper frame 12 through the height H of the upper frame. The width can be, for example, 4-5 cm, though could vary depending on the size of the box and other strength requirements. The protruding portion 44 is offset from the top of the upper frame 12, extending only a portion of the height of the upper frame, for example, 30-70%. The protruding portion 44 is curved, arcuate or semi-circular in shape, and is complementary to the receiving portion such that a protruding portion 44 can fit within a receiving portion 42, thereby connecting two boxes 10 side by side (see Figure 3). The connection elements 40 are typically integrally formed with the sides/ends of the upper frame 12, though could be formed separately and connected.

Each connection element 40 is identical. Due to complementary paired receiving portion 42 and protruding portion 44, each connection element 40 can freely mate with any other identical connection element 40 without regard for gender, alignment, orientation, etc.

Figure 3 shows a top view of two boxes 10 connected side by side through their connection elements 40.

The boxes 10 are connected together on their ends 24, 26 to secure together in the same plane through two connection elements 40. The boxes 10 are connected together, by aligning the connection elements 40 of one box with the connection elements 40 of the other box 10 and moving in a vertical direction (the direction of the longitudinal axis of pillars 16), causing the connection elements 40 of one box to slide into the connection elements 40 of the other box 10.

The connection elements 40 are secured together such that the protruding portion 44 of one connection element 40 is slid into the receiving portion 42 of the other element and vice versa. This secures the boxes 10 together in the same plane. The boxes 10 are further aligned and secured together in the plane of the side/end by the curvature of the connection elements 40. Thus, the securing of the connection elements 40 of the respective boxes 10 ensures that the boxes 10 are connected and secured in the direction in the plane of the side/end and in the direction perpendicular to the plane of the side/end. The shape and placement of the connection elements 40 can also ensure that they are self-locking in some embodiments, to hold boxes 10 together once engaged. The self-locking may be caused by a narrowing protruding portion to the bottom of the connection element while a top of the receiving portion may be wider than a bottom of the receiving portion (seen in a vertical direction). When the portions slide vertically into each other the portions will automatically slide towards each other in a horizontal direction and the protruding portion 44 may slide automatically into the receiving portion 42.

By using identical connection elements 40 with complementary paired receiving portions 42 and protruding portions 44, the panels 10 can be easily secured together, freely mounting any connection element 40 to any other connection element 40. This allows for easy connection, making time-consuming aligning and orienting superfluous, for example, to mate a male element with a female element. Additionally, this allows for connecting a plurality of boxes 10 to form complex and/or large drainage structures more easily and quickly. By making time-consuming positioning and orientation superfluous due to the identical connection elements 40 which can secure to any other connection element, the boxes 10 can be easily and simply secured together.

As mentioned, past modular units for building up drainage structures typically included top decks and required proper orientation and alignment for j oining together as the top deck or panel of one box needed to be specifically aligned with the top deck or panel of another box. Box 10 does not include a top deck, and instead includes connection elements 40 directly on the sides of upper frame 12. This allows for the box 10 to be foldable (see Fig. 1D), which makes for easier transport, storage and handling. This can also save materials, weight and costs by eliminating the need for a top panel or deck.

By forming the receiving portion 42 in a curved, arcuate or semicircular shape, the receiving portion 42 can extend minimally into the width of the upper frame, for example, 1,5 cm, or 30% thereby preserving the strength of upper frame 12 and the overall box. The curvature of the protruding portion 44 makes for a strong and reliable connection between boxes in directions along and perpendicular to the plane of the side or end.

Additionally, the configuration of box 10 with connection elements 40 can allow for side connections even in a collapsed or folded condition, thereby securing boxes together for storage or transport without needing additional materials or devices. Connection elements 40 can simply connect together in the folded condition shown in Fig. 1D, with a first folded box 10 connecting side by side with a second folded box. The boxes 10 can then easily separate when the boxes 10 are ready to be unfolded for use and assembled.

The boxes 10 with the connection elements 40 on upper frame 12 allow for securing together in any orientation without the need for any additional securing parts, even in a collapsed state. This results in a more efficient and simple assembly process of a drainage structure, as well as a more stable configuration for storage.

Figure 4 shows two boxes 10 connected side by side with panels 50 attached sides of box 10. While three panels 50 are shown, more panels 50 could be connected, for example, on all sides and ends of the boxes 10. The panel 50 comprises a plurality of perforations through which liquid, as for example rain water, can pass through. The plurality of perforations have different shapes thereby they can be adapted to necessities of the portable rainwater box when in use. For example, a perforation could have a shape such that a pipe or tube can pass through. The panel 50 is attached though connection elements 40, having a complementary shaped connection element 40 on its inside which align and connect to the connection elements 40 on upper frames 12 of boxes. Thus, connection elements 40 can also provide a simple way of connecting other elements, e.g., panels, to boxes 10. Such panels 50 can be especially useful to form an outer side of an assembly of boxes, reducing material use in the inner parts of such an assembly, where full walls or panels are not needed.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A drainage box (10) comprising:
an upper frame (12) in a rectangular shape with first and second opposing sides (20,22), first and second opposing ends (24,26) and an open middle portion between the sides and ends; and
at least one connection element (40) on each of the first and second opposing sides (20,22) and first and second opposing ends (24,26), each connection element (40) comprising:
a receiving portion (42) and a protruding portion (44), the receiving portion (42) shaped complementary to the protruding portion (44) such that a frame having a similar connection element can secure to the upper frame (12) by engaging the respective connection elements such that the protruding portion (44) of the connection element (40) of the upper frame (12) fits into the receiving portion of the connection element of the second frame, and the receiving portion (42) of the connection element (44) of the upper frame (12) receives the protruding portion of the connection element of the second frame,
wherein the receiving portion (42) extends through the upper frame (12) and the protruding portion (44) has a height less than a height of the receiving portion and frame, and
wherein the protruding portion (44) extends from an end of the receiving portion (42).

2. The box of claim 1, wherein the protruding portion (44) is offset from a top of the upper frame.

3. The box of any of the preceding claims, where in the protruding portion (44) is a curved, arcuate or semicircular extension.

4. The box of any of the preceding claims, wherein the receiving portion (42) is a curved, arcuate or semicircular groove extending into the upper frame.

5. The box of claim 4, wherein the receiving portion (42) extends a maximum of 40% of the width of the frame side or end.

6. The box of any of the preceding claims, wherein the at least one connection element (40) is positioned and shaped to be connectable to a further connection element of the second frame to secure the upper frame (12) with respect to the second frame in both a direction perpendicular to a plane of the side or end and a direction in the plane of the side or end.

7. The box of any of the preceding claims, wherein each side and end (20,22,24,26) comprises at least two connection elements.

8. The box of any of the preceding claims, comprising a polymer material.

9. The box of any of the preceding claims, wherein the connection elements are integrally formed with the first and second sides (20,22) and first and second ends (24,26).

10. The box of any of the preceding claims, wherein the at least one connection element (40) is self-locking when secured to another connection element.

11. The box of any of the preceding claims, and further comprising: a lower frame (14) in a rectangular shape with first and second opposing sides (20,22), first and second opposing ends (24,26) and an open middle portion between the sides and ends; and at least one column (16) connecting each of the first sides (20) of the upper and lower frames (12,14), each of the second sides (22) of the upper and lower frames (12,14), each of the first ends (24) of the upper and lower frames (12,14) and each of the second ends (26) of the upper and lower frames (12,14).

12. The box of claim 10, wherein the first and second sides (20,22) and ends (24,26) of the respective upper and lower frames (12,14) are rotatably connected to each other.

13. A plurality of boxes (10) according to any of claims 11-12, wherein the boxes (10) are secured together through the engagement of connection elements (40), wherein a second box with an identical connection element is secured to a first box by connecting through engaging the respective connection elements such that the protruding portion of the connection element of the first box is fitted into the receiving portion of the connection element of the second box and the protruding portion of the connection element of the second box is received in the receiving portion of the connection element of the first box, preferably wherein adjacent boxes (10) are secured together at their respective upper frames by at least two identical connection elements on each upper frame engaging each other to connect and secure the adjacent boxes together.

14. A drainage structure with a top side, a bottom side and sides extending between the top side and the bottom side, wherein the top side, bottom side and/or sides comprise a plurality of boxes (10) according to any of the preceding claims, wherein adjacent boxes in a similar plane are secured together by means of their respective connection elements.

15. A method of manufacturing a frame (12,14) for a drainage box (10), the method comprising:
connecting first and second sides (20,22) to first and second ends (24,26) to form a rectangular shape with an open central portion, wherein each of the first and second sides and ends comprise at least one connection element (40), each connection element comprising:
a receiving portion (42) and a protruding portion (44), the receiving portion shaped complementary to the protruding portion such that a frame having a similar connection element can secure to the upper frame by engaging the respective connection elements such that the protruding portion of the connection element of the upper frame fits into the receiving portion of the connection element of the second frame, and the receiving portion of the connection element of the upper frame receives the protruding portion of the connection element of the second frame, wherein the receiving portion extends through the upper frame and the protruding portion has a height less than a height of the receiving portion and frame, and wherein the protruding portion (44) extends from an end of the receiving portion (42).
